# EUROPÄISCHE PATENTSCHRIFT

(11) **EP 0 579 072 B1**
(45) Veröffentlichungstag und Bekanntmachung des Hinweises auf die Patenterteilung: **24.01.1996**
(21) Anmeldenummer: 93110681.9
(22) Anmeldetag: 05.07.1993
(51) Int. Cl.: C09K 5/04

(54) **Neue Kältemittelzusammensetzungen**
Novel refrigerant compositions
Nouveaux compositions frigorigènes

(30) Priorität: 11.07.1992 DE 4222855
(43) Veröffentlichungstag der Anmeldung: 19.01.1994
(73) Patentinhaber: Solvay Fluor und Derivate GmbH, D-30173 Hannover (DE)
(72) Erfinder: Döring, Reinhold, D-4430 Steinfurt 1 (DE); Buchwald, Hans, D-3003 Ronnenberg (DE); von Eynatten, Christoph, D-3004 Isernhagen HB (DE)
(74) Vertreter: Lauer, Dieter, Dr.

(56) Entgegenhaltungen:
- EP-A- 0 430 130
- EP-A- 0 430 170
- WORLD PATENTS INDEX (online), ACCESSION NO. 92-162202, DERWENT PUBLICAIONS LTD. , London & JP-A-04-096 989

## Beschreibung

Die vorliegende Erfindung betrifft neue Zusammensetzungen aus Trifluormethan und 1,1,1,2-Tetrafluorethan, die sich als Kältemittel in Kältemaschinen und Klimaanlagen eignen.

In Klimaanlagen und Kältemaschinen für den mittleren und tiefen Temperaturbereich wurde bisher in vielen Fällen das Kältemittel Chlordifluormethan (= R22) eingesetzt. Aus ökologischen Gründen ist die Verwendung des Kältemittels R22 inzwischen nicht mehr wünschenswert.

Es bestand daher die Aufgabe, für derartige Kältemaschinen und Klimaanlagen geeignete Kältemittel zur Verfügung zu stellen.

Es wurden nun Zusammensetzungen aus Trifluormethan (= R23) und 1,1,1,2-Tetrafluorethan (- R134a) gefunden, welche sich als Kältemittel für Kältemaschinen und Klimaanlagen eignen.

Gegenstand der Erfindung sind daher als Kältemittel in Kältemaschinen und Klimaanlagen geeignete Zusammensetzungen, die aus 2 bis 8 Gew.-% Trifluormethan (= R23) und 92 bis 98 Gew.-% 1,1,1,2-Tetrafluorethan (- R134a) bestehen sowie deren Verwendung als Kältemittel in Kältemaschinen und Klimaanlagen. Besonders bevorzugt sind dabei Zusammensetzungen, die R23 in einer Menge von 4 bis 6 Gew.-% enthalten.

Die erfindungsgemäßen Zusammensetzungen eignen sich in vorteilhafter Weise besonders als Kältemittel für den mittleren und tiefen Temperaturbereich mit Verdampfungstemperaturen (tₒ) unter -25 °C, beispielsweise als Kältemittel für den Temperaturbereich mit tₒ zwischen -25 °C bis -45 °C in Kältemaschinen, wie z.B. Tiefkühlschränken, Tiefkühltruhen, Kältekammern für Zwecke der Luftfahrt und Wissenschaft oder Kältekammern zum Schnellgefrieren von Lebensmitteln, Kühlanlagen für Lebensmittelmärkte, industriellen Großkälteanlagen und Klimageräten.

Die nachfolgenden Beispiele sollen die Erfindung näher erläutern, ohne sie jedoch in ihrem Umfang zu begrenzen.

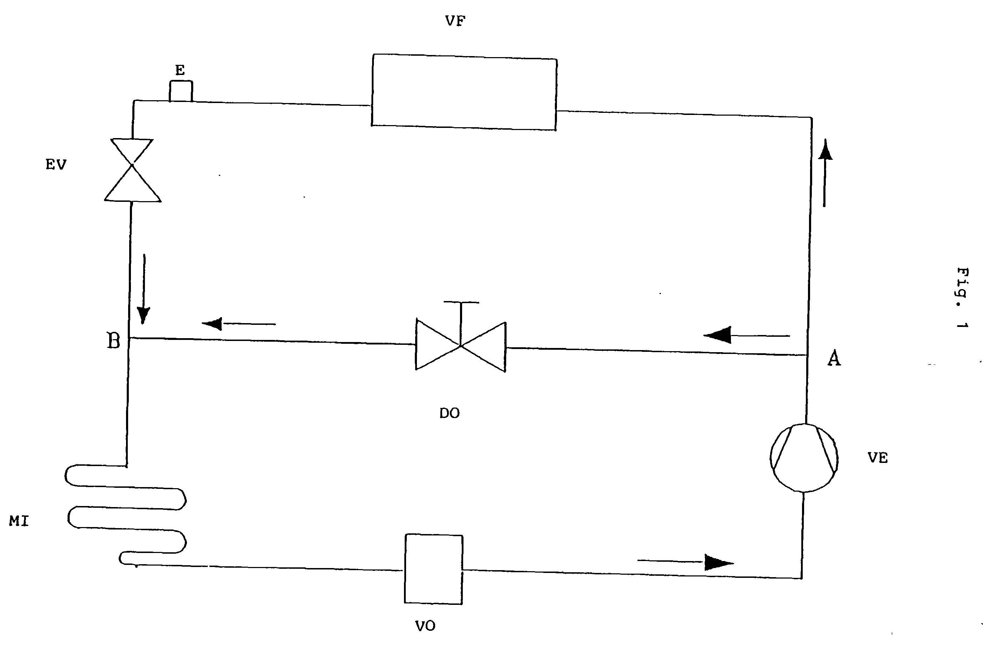

Fig. 1: Schema eines Verdichterprüfstandes (VE: Verdichter, VF: mit Wasser gekühlter Verflüssiger, DO: Drosselstelle, EV: Expansionsventil, MI: Mischrohr, VO: Volumenstrommeßgerät, A, B: Verzweigungsstellen, E: Einlaßventil)

### Beispiele

Beispiel 1:

### Herstellung einer Kältemittelzusammensetzung aus R23 und R134a.

Ein Druckbehälter wurde mit Hilfe einer Vakuumpumpe evakuiert und anschließend in einer handelsüblichen Tiefkühltruhe auf ca. -25 °C abgekühlt. Unter Zuhilfenahme einer Waage wurden über ein Ventil zunächst die berechnete Menge der höher siedenden Komponente R134a und anschließend die tiefer siedende Komponente R23 in den Druckbehälter eindosiert. Es wurde eine Zusammensetzung erstellt, die aus 95 Gew.-% R134a und 5 Gew.-% R23 bestand.

### Beispiel 2:

### Kältetechnische Eigenschaften einer Kältemittelzusammensetzung aus R23 und R134a.

Mit der nach Beispiel 1 hergestellten Kältemittelzusammensetzung aus 5 Gew.-% R23 und 95 Gew.-% R134a wurden zur Ermittlung der kältetechnischen Eigenschaften Versuche auf einem an sich bekannten Verdichterprüfstand (Hersteller: Fa. Copeland) durchgeführt. Der Verdichterprüfstand arbeitet nach dem Teilkondensationsverfahren und umfaßt ein Kreislaufsystem, welches einen Verdichter VE, einen Verflüssiger VF, eine Drosselstelle DO, ein Einlaßventil E, ein Expansionsventil EV, ein Mischrohr MI sowie ein Volumenstrommeßgerät VO über Rohrleitungen miteinander verbunden enthält. Die wesentlichen Stationen des verwendeten Verdichterprüfstandes sind schematisch in Figur 1 dargestellt.

Der das Kältemittel enthaltende Druckbehälter wurde an das vor dem Expansionsventil liegende Einlaßventil des evakuierten Verdichterprüfstands angeschlossen. Für den Transfer des Kältemittels in flüssiger Form in die evakuierte Kälteanlage wurde der Druckbehälter wieder auf Raumtemperatur aufgewärmt. Anschließend wurden auf dem Verdichterprüfstand die Messungen zur Ermittlung der kältetechnischen Eigenschaften nach dem Teilkondensationsverfahren durchgeführt. Die Messungen wurden gemäß den Normvorschriften DIN 8977 und ISO 917 durchgeführt. Das Verfahren beruht auf der Aufteilung des den Verdichter VE verlassenden Kältemittelgasstromes im Verzweigungspunkt A in einen zu verflüssigenden und einen zu drosselnden Kältemittel strom, welche im Punkt B wieder zusammengeführt werden, nachdem die aus dem Verflüssiger VF kommende Mischung über das Expansionsventil EV wieder expandiert wurde. In einem Mischrohr MI findet die Verdampfung des verflüssigten Kältemittelanteils und die Vermischung mit dem von der Drosselstelle DO kommenden Gasstrom statt. Gemessen werden die Temperaturen und Drücke am Eintritt in den Verdichter (t₁ₕ, pₒ) und am Austritt aus dem Verdichter (t₂ₕ, p_{c}), der effektive Volumenstrom V_{eff} und die Drehzahl der Verdichterwelle.

Für die erfindungsgemäße Zusammensetzung aus R23 und R134a, welche ein nichtazeotropes Gemisch darstellt, wurden außerdem auf an sich bekannte Weise nach dem Isochorenprinzip p-v-T-x-Messungen durchgeführt. Unter Berücksichtigung der aus den p-v-T-x-Messungen gewonnenen Daten über das volumetrische Verhalten der erfindungsgemäßen Zusammensetzung und der Versuchsergebnisse am Verdichterprüfstand konnten auf an sich bekannte Weise über die Aufstellung des Mollier-Diagramms die folgenden kältetechnischen Eigenschaften für die erfindungsgemäße Kältemittelzusammensetzung ermittelt bzw. berechnet werden:

| | |
|---|---|
| Verdampfungstemperatur (tₒ) | -39,8 bis -27 °C |
| Druck am Eintritt des Verdichters (pₒ) | 1,05 bar |
| Temperatur am Verdichtereintritt (t₁ₕ) | 1,82 °C |
| Druck am Austritt des Verdichters (p_{c}) | 10,60 bar |
| Temperatur am Verdichteraustritt (t₂ₕ) | 97,73 °C |
| Verflüssigunstemperatur (t_{c}) | 38,5 bis 25,6 °C |
| effektiver Kältemittelvolumenstrom (V_{eff}) | 6,37 m³/h |

| | | |
|---|---|---|
| Leistungszahl des Kälteprozesses | η_{KA} | 2,10 |
| Liefergrad | λ | 0,698 |
| isentroper Verdichtungswirkungsgrad | ηᵢₛ | 0,716 |
| Kälteleistung | Qₒ | 1,37 kW |
| Druckverhältnis | p_{c}/pₒ | 10,1 |
| Kältemittelmassenstrom | m_{R} | 29,68 kg/h |

Die auf der Grundlage experimenteller Messungen ermittelten Daten belegen die guten kältetechnischen Eigenschaften der erfindungsgemäßen Zusammensetzungen aus R23 und R134a. Mit den erfindungsgemäßen Kältemittelzusammensetzungen werden eine hohe Kälteleistung und eine hohe Leistungzahl bei akzeptablem Druckverhältnis erreicht.

## Patentansprüche

1. Als Kältemittel in Kältemaschinen und Klimaanlagen geeignete Zusammensetzungen, dadurch gekennzeichnet, daß sie aus 2 bis 8 Gew.-% Trifluormethan und 92 bis 98 Gew.-% 1,1,1,2-Tetrafluorethan bestehen.

2. Zusammensetzungen gemäß Anspruch 1, dadurch gekennzeichnet, daß sie 4 bis 6 Gew.-% Trifluormethan enthalten.

3. Verwendung von Zusammensetzungen gemäß Anspruch 1 als Kältemittel in Kältemaschinen und Klimaanlagen.

## Claims

1. Compositions suitable as refrigerants in refrigerating machines and air-conditioning systems, characterised in that they consist of from 2 to 8% by weight of trifluoromethane and from 92 to 98% by weight of 1,1,1,2-tetrafluoroethane.

2. Compositions according to Claim 1, characterised in that they contain from 4 to 6% by weight of trifluoromethane.

3. Use of compositions according to Claim 1 as refrigerants in refrigerating machines and air-conditioning systems.

## Revendications

1. Compositions apppropriées comme agents frigorigènes dans des machines frigorifiques et des installations de conditionnement d'air, caractérisées en ce qu'elles se composent de 2 à 8 % en poids de trifluorométhane et de 92 à 98 % en poids de 1,1,1,2-tétrafluoroéthane.

2. Compositions selon la revendication 1, caractérisées en ce qu'elles contiennent 4 à 6 % en poids de trifluorométhane.

3. Utilisation de compositions selon la revendication 1 comme agents frigorigènes dans des machines frigorifiques et des installations de conditionnement d'air.
